# EUROPEAN PATENT APPLICATION

(11) **EP 1 832 565 A1**
(43) Date of publication of application: **12.09.2007**
(21) Application number: 06782281.7
(22) Date of filing: 03.08.2006
(51) Int. Cl.: C04B 35/565, C04B 35/571, C04B 35/573, C04B 35/64

(54) **JIG FOR SILICON CARBIDE FIRING AND METHOD FOR PRODUCING POROUS SILICON CARBIDE BODY**

(30) Priority: 03.08.2005 JP 2005225341
(71) Applicant: IBIDEN CO., LTD., Ogaki-shi Gifu 503-8604 (JP)
(72) Inventor: TAJIMA, Kosei c/o IBIDEN CO., LTD., Ibi-gun, Gifu 5010695 (JP)
(74) Representative: HOFFMANN EITLE
(86) International application number: PCT/JP2006/315421
(87) International publication number: WO 2007/015550

(57) **Abstract**

An object of the present invention is to provide a jig for firing a silicon carbide based material, which is a jig used for firing a silicon carbide based molded body and capable of allowing the sintering of the silicon carbide based molded body to proceed steadily due to its ability to surely supply SiO within a firing system, and the jig for firing a silicon carbide of the present invention is a jig for firing a silicon carbide based material, which is used for placing a silicon carbide based molded body thereon upon firing of the silicon carbide based molded body, wherein a SiO source layer is formed on at least a part of the surface of the jig for firing a silicon carbide based material.

## Description

### TECHNICAL FIELD

The present invention relates to a jig for firing a silicon carbide based material to be used upon firing of a silicon carbide based molded body, and a method for manufacturing a porous silicon carbide body.

### BACKGROUND ART

Recently, particulates contained in exhaust gases that are discharged from internal combustion engines of vehicles, such as buses and trucks, and construction machines and the like have raised serious problems as contaminants harmful to the environment and the human body.
There have been proposed various ceramic filters capable of capturing particulates in exhaust gases by allowing the exhaust gases to pass through porous ceramics to purify the exhaust gases.

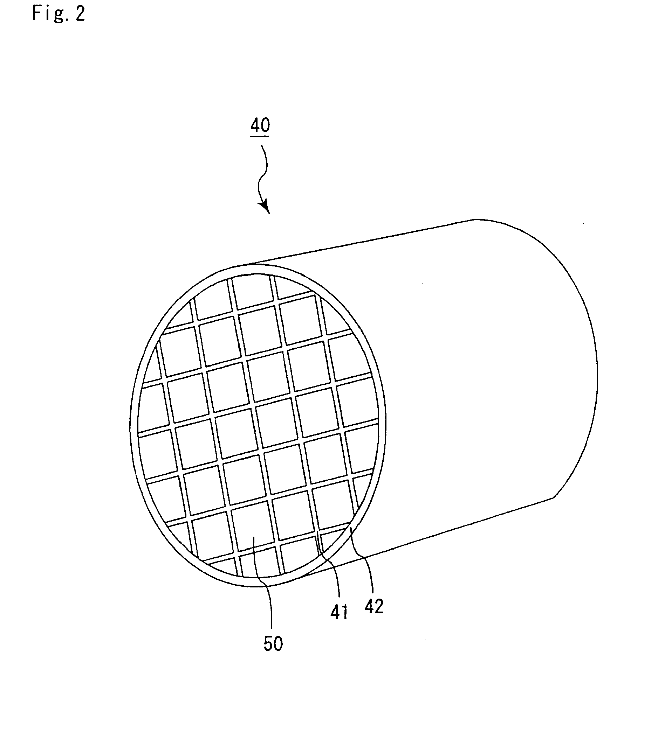

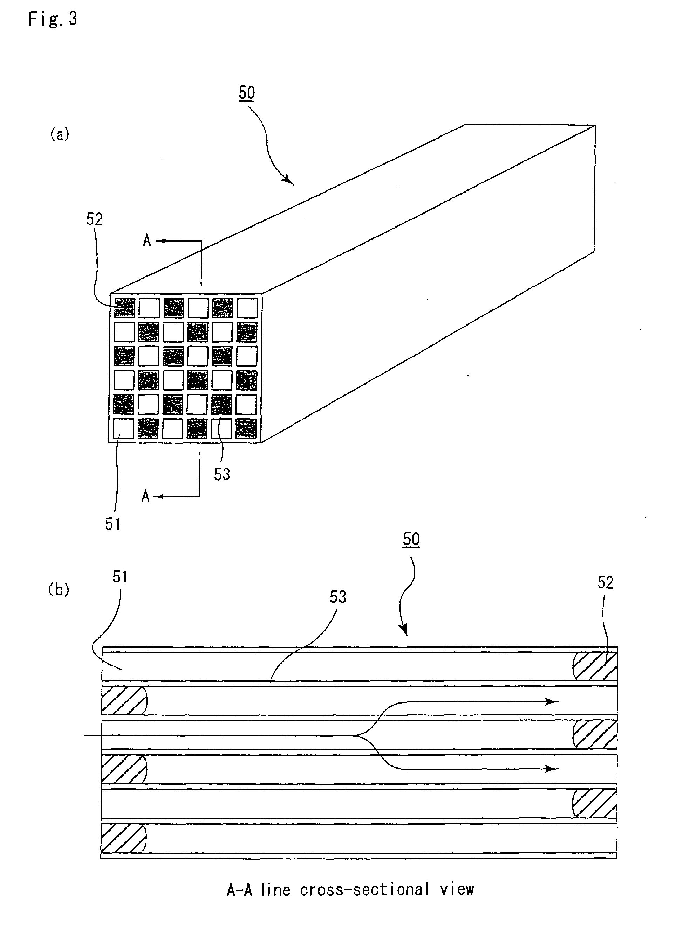

In the ceramic filter 40 as shown in Fig. 2, a plurality of porous silicon carbide bodies 50, which are porous ceramic bodies, are combined to one another by interposing a sealing material layer 41, and a sealing material layer 42 is further formed on the periphery of the combined porous silicon carbide bodies 50. As shown in Fig. 3, the porous silicon carbide body 50 has a structure in which a number of cells 51 are longitudinally placed in parallel with one another, and a cell wall 53 separating the cells 51 is allowed to function as a filter.

In other words, as shown in Fig. 3(b), each of the cells 51, formed in the porous silicon carbide body 50 is sealed by a plug 52 at either one end of its exhaust gas-inlet or exhaust gas-outlet sides so that exhaust gases that flow into one of cells 51 are discharged from another cell 51 after surely passing through the cell wall 53 that separates the cells 51, and, when exhaust gases pass through the cell wall 53, particulates are captured by the cell wall 53 portion so that the exhaust gases are purified.
Those porous silicon carbide bodies 50 of this kind are excellent in heat resistance, and a regenerating treatment thereof and the like are easily carried out, therefore they are used in various large vehicles, vehicles equipped with diesel engine, and the like.

In the conventional manufacture of the porous silicon carbide body of this kind, firstly a silicon carbide powder, a binder and a dispersion medium are mixed to prepare a mixed composition for manufacturing a molded body, and then extrusion molding and the like is carried out on the mixed composition to manufacture a silicon carbide based molded body.

Next, the obtained silicon carbide based molded body is dried by using a heater and the like, so as to manufacture a dried body of the silicon carbide molded body, which has a certain strength and is easy to deal with.

After the drying process, a degreasing process is carried out by heating the silicon carbide based molded body at a temperature of 300 to 650 °C under an oxygen-containing atmosphere so as to volatilize a solvent, and also to decompose and eliminate a resin component in the components of an organic binder, and further a firing process is carried out by heating the silicon carbide powder at a temperature of 2000 to 2200 °C under an inert gas atmosphere for sintering, thereby a porous silicon carbide body is manufactured.

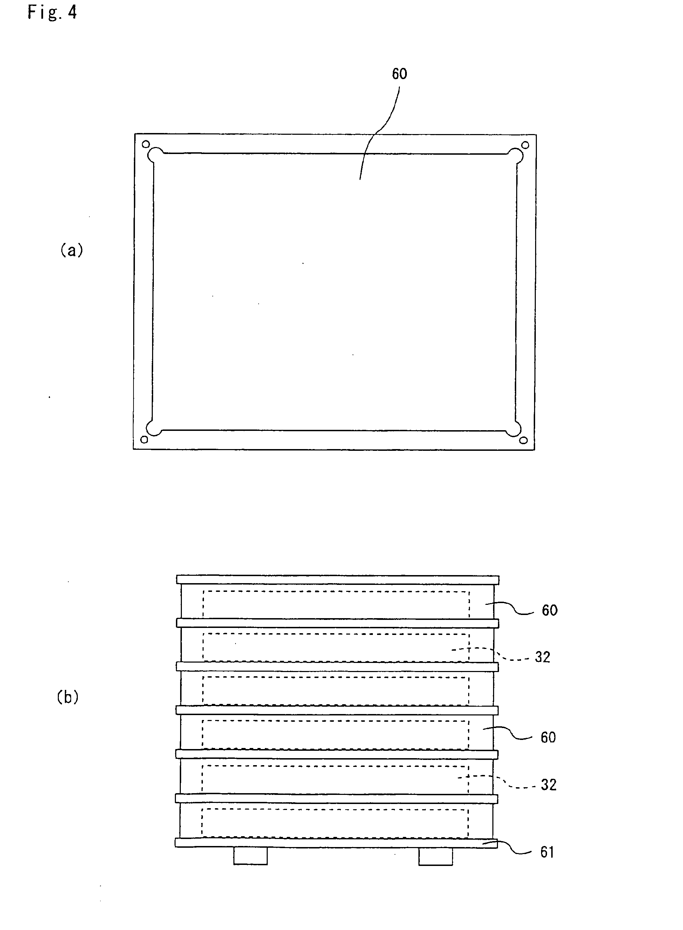

Fig. 4 (a) is a plain view that schematically shows a jig used for the process of firing a silicon carbide based molded body, and Fig. 4 (b) is a front view that shows a state in which the above-mentioned jigs are piled up in a plurality of stages for firing.
According to the conventional firing process of a silicon carbide based molded body, first a plurality of the silicon carbide based molded bodies 32 that have been subjected to the degreasing process are placed in a box-shaped jig 60 with an upper face opened as shown in Fig. 4, and by piling up a plurality of the jigs 60 in which silicon carbide based molded bodies 32 are placed, a piled-up body is manufactured. Next, the piled-up body is placed on a supporting table 61, which is then transported onto a conveyor table such as a belt conveyer, and by heating and firing the silicon carbide based molded bodies 32 by a heater, porous silicon carbide bodies are manufactured.

In the firing process of a silicon carbide based molded body of this kind, sintering of silicon carbide proceeds as the reaction shown in the following equation (1) proceeds to the right side of the equation (1).

SiO+2C⇄SiC+CO (1)

Here, for the advance of the reaction shown in the reaction equation (1), a firing method carried out by using a firing jig paved with carbon particles, and a firing furnace equipped with an instrument for removing carbon monoxide generated in the firing furnace have been proposed (see, for example, Patent Documents 1 and 2).

Patent Document 1: JP-A 2002-226271
Patent Document 2: JP-A 2002-249385

### DISCLOSURE OF THE INVENTION

### PROBLEMS TO BE SOLVED BY THE INVENTION

On the other hand, SiO in the reaction equation (1) has its source of supply in SiO₂, which is contained as an impurity in the silicon carbide material and reacts with carbons in the firing process to become SiO. For this reason, when the amount of SiO₂ contained in the material is high, by concomitantly applying the above-mentioned firing method using the firing jig paved with carbon particles, and the like, sintering of silicon carbide based on the reaction shown in the reaction equation (1) proceeds steadily.
However, when the amount of SiO₂ contained as an impurity in the silicon carbide material is low, the supplying amount of SiO becomes low, and therefore sintering based on the reaction equation (1) hardly proceeds even if the above-mentioned firing method using a firing jig paved with carbon particles and the like is used. As a result, the resulting silicon carbide based sintered body has some room for improvement in the quality, such as high pressure loss and weak bending strength.

The present invention is devised to solve those problems, and aims to provide a jig for firing a silicon carbide based material, which is capable of steadily supplying SiO into the firing system during firing of a silicon carbide based molded body.
The present invention also aims to provide a method for manufacturing a porous silicon carbide body which has been certainly sintered.

### MEANS FOR SOLVING THE PROBLEMS

The jig for firing a silicon carbide based material according to the present invention is a jig for firing a silicon carbide based material used for placing a silicon carbide based molded body thereon upon firing of the silicon carbide based molded body, wherein a SiO source layer is formed on at least a part of the surface of the jig for firing a silicon carbide based material.

In the jig for firing a silicon carbide based material of the present invention, the thickness of the SiO source layer is desirably 0.2 mm or more.
Also, the SiO source layer is desirably formed by using hydridopolycarbosilane.
Moreover, the SiO source layer is also desirably formed by using a mixture containing a SiC particle and a SiO₂ particle.
Furthermore, the SiO source layer is desirably a layer comprising a recrystallized SiC.

The method for manufacturing a porous silicon carbide body according to the present invention comprises a degreasing process for degreasing a silicon carbide based molded body containing a pillar-shaped silicon carbide powder and a binder, and a firing process for firing the silicon carbide based molded body within a system including a SiO source.

In the method for manufacturing a porous silicon carbide body, the firing process is desirably performed by placing the silicon carbide based molded body on the jig for firing a silicon carbide based material according to the present invention.

### EFFECTS OF THE INVENTION

In the jig for firing a silicon carbide based material of the present invention, a SiO source layer is formed on at least a part of the surface of the jig for firing a silicon carbide based material, and therefore it is possible to steadily supply SiO into the firing system upon firing of a silicon carbide based molded body. Accordingly, by using the jig for firing a silicon carbide based material, it is possible to allow sintering of silicon carbide based molded body to progress steadily.
Furthermore, the porous silicon carbide body can be preferably used as a ceramic filter.

In accordance with the method for manufacturing a porous silicon carbide body of the present invention, since sintering is performed within a system including a SiO source, it is possible to allow sintering of silicon carbide based molded body to progress steadily.

### BEST MODE FOR CARRYING OUT THE INVENTION

First, the jig for firing a silicon carbide based material according to the present invention will be described.
The jig for firing a silicon carbide based material according to the present invention is a jig for firing a silicon carbide based material, which is used for placing a silicon carbide based molded body thereon upon firing of the silicon carbide based molded body, wherein a SiO source layer is formed on at least a part of the surface of the jig for firing a silicon carbide based material.

In the jig for firing a silicon carbide based material of the present invention, a SiO source layer is formed on a part or all of the surface of the jig for firing a silicon carbide based material.
The desirable lower limit of the thickness of the SiO source layer is 0 .2 mm. The thickness of less than 0. 2 mm causes an insufficient supply of SiO upon manufacturing of a porous silicon carbide body, and as a result, sintering of silicon carbide does not steadily proceed. Moreover, a ceramic filter using the porous silicon carbide body of this kind may have a high pressure loss or a low bending strength.
The more desirable lower limit of the thickness of the SiO source layer is 0.8 mm. When the thickness of the SiO source layer is 0.8 mm or more, it is possible to certainly manufacture a silicon carbide based fired body having the desired average pore diameter with a low pressure loss and small variation.

On the other hand, the desirable upper limit of the thickness of the SiO source layer is 1.6 mm. Even if the thickness of the SiO source layer exceeds 1.6 mm, the effect of inducing a certain progress of the sintering of a silicon carbide based molded body hardly improves, and moreover, forming a SiO source layer having a thickness of more than 1.6 mm is a complex work and requires a higher cost as well.
Furthermore, if trying to form a SiO source layer having a thickness exceeding 1.6 mm, warpage may occur in the jig for firing a silicon carbide based material upon forming, and when warpage occurs in the jig for firing a silicon carbide based material, there may be a risk of deterioration in the quality of the porous silicon carbide bodies to be manufactured.

There is no specific limitation on the SiO source layer as long as the SiO source layer is capable of supplying SiO during firing of a silicon carbide based molded body, and examples thereof include a layer formed by using a hydridopolycarbosilane such as allylhydridopolycarbosilane, a layer formed by using a mixture containing a SiC particle and a SiO₂ particle, a layer comprising a recrystallized SiC, a layer comprising a reaction-sintered SiC, and the like.

With respect to a method for forming the SiO source layer, in case where the SiO source layer is a layer formed by using the hydridopolycarbosilane and the like, examples of the method include, a method of applying a polymer consisting mainly of the hydridopolycarbosilane and the like onto the region for forming the SiO source layer in the jig for firing a silicon carbide based material, and then carrying out a drying treatment and a firing treatment, and the like.
Examples of the method for applying the polymer include spray coating, wash coating, brush application, drop application, printing and the like.

With respect to a method for forming the SiO source layer, in case where the SiO source layer is a layer formed by using a mixture containing the SiC particle and the SiO₂ particle, examples of the method include a method of applying or placing the mixture containing a SiC particle and a SiO₂ particle on the region for forming the SiO source layer in the jig for firing a silicon carbide based material, and then, carrying out a drying treatment and a firing treatment; a method of coating the region for forming the SiO source layer in the jig for firing a silicon carbide based material with the above-mentioned mixture by using a coating method such as chemical vapor deposition, physical vapor deposition, molten-salt method, nitrogen diffusion method, spraying; and the like.
With regard to the method for applying the mixture, the same methods as those for applying the polymer consisting mainly of hydridopolycarbosilane and the like may be used.

In the mixture containing the SiC particle and the SiO₂ particle, the average particle diameter of the SiC particle is desirably 0.1 to 50 µm and more desirably 0.1 to 1.0 µm. Moreover, the SiC particle may comprise α-type SiC or β-type SiC, or both of α-type SiC and β-type SiC.
Furthermore, in the mixture containing the SiC particle and the SiO₂ particle, the average particle diameter of the SiO₂ particle is desirably 0.1 µm for the lower limit and 200 µm for the upper limit, and more desirably 10 µm for the lower limit and 150 µm for the upper limit. Also, the shape of the SiO₂ particle is not particularly limited, and may be a sphere shape or a crushed shape.

When the mixture containing the SiC particle and the SiO₂ particle is applied or placed, the mixture may include an organic solvent, if necessary. With this arrangement, application or placement of the mixture can be easily carried out.
Examples of the organic solvent include methyl cellulose, carboxymethyl cellulose, hydroxyethyl cellulose, polyethylene glycol, benzene, an alcohol such as methanol, and the like.

With respect to a method for forming the SiO source layer, in case where the SiO source layer is a layer comprising a recrystallized SiC, an example of the method includes a method of performing a firing treatment, with the material for recrystallization including a SiC particle and a SiO₂ particle being placed on the jig for firing a silicon carbide based material, in a firing furnace under a SiO gas or CO gas atmosphere, so that a layer comprising a recrystallized SiC is formed on the surface of the jig for firing a silicon carbide based material.
The material for recrystallization including a SiC particle and a SiO₂ particle may be a powder or an agglomerate of the wet mixture, or may be a molded body having an arbitrary shape, including a molded body (honeycomb molded body) having a shape of a round, oval, polygonal or pillar and the like in which a plurality of cells are longitudinally placed in parallel to each other with a cell wall therebetween.
Here, the material for recrystallization including the SiC particle and the SiO₂ particle desirably contains an organic binder, and in this case, the content of the organic binder is desirably 1 to 10 % by weight of the total amount of the SiC particle and the SiO₂ particle. Also, water may be added to the material for crystallization including the SiC powder and the SiO₂ particle, if appropriate.

In the material for recrystallization including the SiC particle and the SiO₂ particle, the average particle diameter of the SiC particle is desirably 0.1 to 50 µm and more desirably 0.1 to 1.0 µm. Also, the SiC particle may be α-type SiC or β-type SiC, or may comprise both of α-type SiC and β-type SiC.
Moreover, in the material for recrystallization including the SiC particle and the SiO₂ particle, the average particle diameter of the SiO₂ particle is desirably 0.1 µm for the lower limit and 200 µm for the upper limit, and more desirably 10 µm for the lower limit and 150 µm for the upper limit. Moreover, the shape of the SiO₂ particle is not particularly limited, and may be a sphere shape or a crushed shape.

When a layer comprising the recrystallized SiC is formed as the SiO source layer, a material for crystallization including SiC particles on which a SiO₂ film is formed at the surface is used in place of the material for recrystallization including the SiC particle and the SiO₂ particle, and except for above, the same method as those mentioned above may be used, so that the layer comprising a recrystallized SiC may be formed on the surface of the jig for firing a silicon carbide based material.
Here, the material for crystallization including the SiC particles with the surface on which a SiO₂ film is formed, may be a powder or an agglomerate of the wet mixture, or may be a molded body having an arbitrary shape (including a honeycomb molded body).
The material for crystallization including the SiC particles with the surface on which a SiO₂ film is formed, also desirably contains an organic binder, and the content of the organic binder is desirably 1 to 10 % by weight of the amount of the SiC particles with the surface on which a SiO₂ film is formed. Furthermore, water may be added to the material, if appropriate.

In the material for crystallization including the SiC particles with the surface on which a SiO₂ film is formed, the average particle diameter of the SiC particle is desirably 0.1 to 50 µm and more desirably 0.1 to 1.0 µm. The SiC particle may be α-type SiC or β-type SiC, or may comprise both of α-type SiC and β-type SiC, though α-type SiC is desirable.

When a layer comprising a recrystallized SiC is formed by a firing treatment using the material for recrystallization, the firing treatment may be carried out at a temperature of 1400 to 2300 °C. In addition, the material for recrystallization may be subjected to a drying treatment or a degreasing treatment (at a temperature of 200 to 500 °C) prior to the firing treatment.

When the material for recrystallization is placed on the jig for firing a silicon carbide based material, the amount of the material for crystallization and the location for placing the material for recrystallization are not particularly limited.
Also, if the material for recrystallization used here is a material for recrystallization having the same shape as that of the pillar-shaped silicon carbide based molded body in the method for manufacturing a porous silicon carbide body to be described below, it is advantageous in that, without any change in the manufacturing line used in the method for manufacturing a porous silicon carbide body described below, this manufacturing line can be used for the manufacture of the jig for firing a silicon carbide based material by only changing the starting material.
Furthermore, if a extrusion-molding machine for manufacturing the silicon carbide based molded body and a extrusion-molding machine for manufacturing a material for recrystallization having the same shape as that of the silicon carbide based molded body are installed together, and by sharing other manufacturing line except for these machines, it is possible to manufacture the jig for firing a silicon carbide molded body efficiently.

With regard to the method for forming the SiO source layer, in case where the SiO source layer comprises a reaction-sintered SiC, examples of the method include a method of applying or placing a mixture containing Si (silicon) and C (carbon) onto the region for forming the SiO source layer in the jig for firing a silicon carbide based material, and then performing a firing treatment at a temperature of about 1800 °C, for example, so that a layer comprising a reaction-sintered SiC is formed, and the like.
Furthermore, in case of the application or the placement of the mixture containing SiC and C, the mixture may contain an organic solvent, if necessary. With this arrangement, the application or the placement of the mixture can be more easily carried out. As for the specific examples of the organic solvent, the same organic solvents as those allowed to be included in the mixture containing the SiC particle and the SiO₂ particle may be exemplified.

In the methods of forming the SiO source layer described in the above, the thickness of the SiO source layer can be adjusted by repeating the method as described above for a predetermined number of times.
Also, when a firing treatment is carried out in the respective forming methods as mentioned above, the thickness of the SiO source layer can be adjusted by repeating only the firing treatment for a predetermined number of times, or by adjusting the time period for the firing treatment.

By using those methods, a SiO source layer can be formed on the jig for firing a silicon carbide based material.
To be more specific, in the case where above-mentioned hydridopolycarbosilane is used, presumably, the reaction shown in the following reaction equation (2) proceeds, and thus accordingly, a layer comprising SiC, which functions as a SiO source layer, is formed on the jig for firing a silicon carbide based material. In this method, the thickness of the jig for firing a silicon carbide based material is increased by the thickness of the formed SiO source layer.

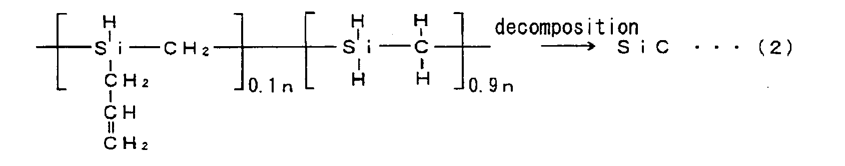

When the mixture containing the SiC particle and the SiO₂ particle is used, presumably, the reactions shown in the reaction equations (3) and (4) shown below proceed to the right sides of the equations (3) and (4), and thus accordingly a layer comprising SiC, which functions as a SiC source layer is formed on the jig for firing a silicon carbide based material. In this method, since the SiO source layer is formed by the reaction with carbons constituting the jig for firing a silicon carbide based material, there is almost no change in the thickness of the jig for firing a silicon carbide based material.

2SiO₂+SiC⇄3SiO+CO (3)

SiO+2C⇄SiC+CO (4)

Moreover, when the material for recrystallization is used, SiC derived from the material for recrystallization is adhered as a recrystallized SiC to the surface of the jig for firing a silicon carbide based material during the firing treatment, resulting in the formation of the SiO source layer comprising a recrystallized SiC.

Furthermore, when the mixture containing Si and C is used, a SiC layer is formed on the jig for firing a silicon carbide based material by reaction sintering, resulting in the formation of the SiO source layer comprising a reaction-sintered SiC.

The reason why those layers comprising SiC functions as a SiO source layer can be attributed to their capacity to supply SiO in the firing furnace when the reaction shown in the following reaction equation (5) proceeds to the right side of the equation (5) upon firing a silicon carbide based molded body.

SiC+CO⇄SiO+2C (5)

As for the material constituting the jig for firing a silicon carbide based material, for example, a carbon material and the like may be exemplified. This is because such materials become a carbon source in the reaction shown in the above reaction equation (1), allowing sintering of a silicon carbide based molded body to proceed steadily, and also because they are suitable for the formation of the SiO source layer based on the reactions shown in the reaction equations (3) and (4).
The carbon material may be, for example, a porous carbon having pores.

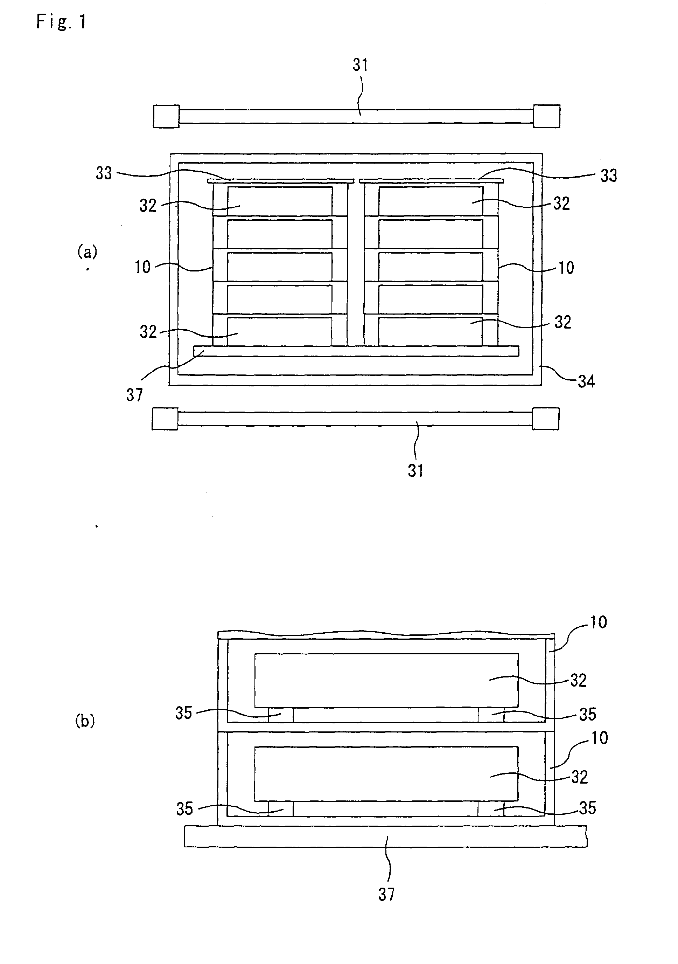

The shape of the jig for firing a silicon carbide based material is usually a box shape with an upper face opened (see Fig. 1), and a SiO source layer is formed on a part or all of the bottom face thereof (the face where the silicon carbide based molded body is placed). Moreover, the SiO source layer may be formed on the side faces.
Furthermore, a notched portion or a through hole may be formed in a part of the jig for firing a silicon carbide based material.
If a through hole or a notched portion as mentioned above is formed, upon piling up the jigs for firing a silicon carbide based material in a plurality of stages to carry out firing of the silicon carbide based molded body, an ambient gas passes through inside the jig for firing a silicon carbide based material, and thus the temperature of the atmosphere surrounding the silicon carbide based molded body placed inside the jig for firing a silicon carbide based material can be made almost uniform, regardless of the location of the jig or the location of the silicon carbide based molded body placed inside the jig, and also the concentration of the components such as SiC, SiO and Si in the atmosphere surrounding the silicon carbide based molded body can be made uniform, and as a result, it is possible to fire each of the silicon carbide based molded bodies under uniform conditions.

A carbon powder may be held on the jig for firing a silicon carbide based material.
When the carbon powder is held on the jig for firing a silicon carbide based material, the below-mentioned effects can be enjoyed.
In the firing process of a silicon carbide based molded body, sintering of silicon carbide proceeds based on the reaction shown in the above reaction equation (1).
Here, as mentioned above, the SiO has its source of supply in impurities in the silicon carbide based molded body or the SiO source layer formed on the jig for filing a silicon carbide based material.
On the other hand, the C (carbon) source in the above reaction equation (1) has its source of supply in carbons existing in the silicon carbide based molded body, or carbons constituting the jig for firing a silicon carbide based material.

However, the amount of carbons existing in the silicon carbide based molded body that has been subjected to a degreasing process is so little that the carbons are soon consumed in the reaction shown in the reaction equation (1). Moreover, carbons constituting the jig for firing a silicon carbide based material and the like can be a good source of carbon supply in the reaction shown in the reaction equation (1), however, when a SiO source layer is formed on the surface of the jig, supply of carbon may become difficult in some cases.
As a result, along with the progress of the firing process, the amount of carbons supplied in the reaction shown in the reaction equation (1) is decreased, while in contrast, the concentration of SiO gas is increased, and as a result, between the high concentration of SiO gas and the SiC mainly constituting the silicon carbide based molded body, the reaction shown in the below-mentioned reaction equation (6) proceeds to the right side of the equation (6).

SiO+SiC⇄2Si+CO (6)

Furthermore, Si comes to exist in the silicon carbide based molded body during firing, and thus sintering of the silicon carbide based molded body of this kind does not proceed smoothly and, although the silicon carbide particle itself undergoes grain growth, the bond, or what is called necking, among the silicon carbide particles that have undergone grain growth is hardly formed, and as a result, there is variation in the strength of the porous silicon carbide bodies to be manufactured, and thus the strength is deteriorated.
In contrast, when a carbon powder is held on the jig for firing a silicon carbide based material as mentioned above, carbons are steadily supplied in the reaction shown in the above reaction equation (1), leading to a more certain progress of sintering of the silicon carbide based molded body.

The following description will discuss the method for manufacturing a porous silicon carbide body according to the present invention.
The method for manufacturing a porous silicon carbide body of the present invention comprises: a degreasing process for degreasing a pillar-shaped molded body of a silicon carbide based material containing a silicon carbide powder and a binder; and a firing process for firing the silicon carbide based molded body within a system including a SiO source.

Fig. 1 (a) is a front view showing a state in which jigs for firing a silicon carbide based material, which are piled up in a plurality of stages, are transported into a firing furnace, and Fig. 1(b) is a partially enlarged front view showing a state in which silicon carbide based molded bodies are piled up by interposing platform members (spacers).

According to the method for manufacturing a porous silicon carbide body of the present invention, first, a pillar-shaped silicon carbide based molded body comprising a silicon carbide powder and a binder is manufactured. In the present invention, a silicon carbide based molded body refers to those that are, after completing a degreasing treatment and a firing treatment, to be made into a silicon carbide based sintered body containing 60% by weight or more of silicon carbide, and the silicon carbide based sintered body desirably contains 96 % by weight or more of silicon carbide.
The structure of the silicon carbide based molded body is not particularly limited, and examples thereof include those having a pillar-shaped body in which a plurality of cells are longitudinally placed in parallel with each other with a cell wall therebetween as mentioned in the background art, and those having a pillar-shaped body with a plurality of intercommunicating pores inside, and the like. The shape is not particularly limited, and may be, for example, a cylindrical shape, a cylindroid shape, a rectangular pillar shape and the like.
In the following description, those having a pillar shape in which a plurality of cells are longitudinally placed in parallel with each other with a cell wall therebetween are used as a silicon carbide based molded body.

Although the particle diameter of the silicon carbide powder is not particularly limited, one that will not undergo shrinkage during the subsequent firing process is preferable. For example, a combination of 100 parts by weight of a powder having an average particle diameter in the range of 0.3 to 50 µm, and 5 to 65 parts by weight of a powder having an average particle diameter in the range of 0.1 to 1.0 µm is preferable for use therein.

The binder is not particularly limited, and examples thereof include methyl cellulose, carboxymethyl cellulose, hydroxyethyl cellulose, polyethylene glycol, and the like.
The preferable blending amount of the binder is normally about 1 to 10 parts by weight relative to 100 parts by weight of the silicon carbide powder.

The dispersion medium is not particular limited, and examples thereof include alcohol such as methanol, an organic solvent such as benzene, water, and the like.
The dispersion medium is blended in an appropriate amount so that the viscosity of the mixed composition is set in a certain range.

Those silicon carbide powder, binder and dispersion medium are mixed by an attritor and the like, and sufficiently kneaded by a kneader and the like, and then extrusion molded and dried to manufacture a pillar-shaped silicon carbide based molded body containing a silicon carbide powder and a binder.
Here, in the method for manufacturing a porous silicon carbide body according to the present invention, the amount of SiO₂ contained as an impurity in the silicon carbide based molded body is not particularly limited, however, if a silicon carbide based -degreased body in which the amount of the SiO₂ is as low as 0.03 % by weight or lower is used in particular, sintering can be carried out steadily in the subsequent firing process.

After this, degreasing of the silicon carbide based molded body manufactured by the above processes is performed.
In the degreasing process of the silicon carbide based molded body, normally, the silicon carbide based molded body is placed in the jig for firing a silicon carbide based material, and then transported into a degreasing furnace to be heated at a temperature of 300 to 650 °C under an oxygen-containing atmosphere.
As a result, the binder and the like are volatilized, and also decomposed and eliminated so that almost only the silicon carbide powder remains.

Upon placing the silicon carbide based molded body in the jig for firing a silicon carbide based material, in order to support the silicon carbide based molded body in a manner to leave a space with the bottom face, the platform members 35 may be put on the bottom face of the jig for firing a silicon carbide based material as shown in Fig. 1(b).
Moreover, the platform member may be integrally formed in the jig for firing a silicon carbide based material of the present invention. By placing the platform member, it is possible to prevent the generation of cracking and the like caused by adherence of the degreased body or sintered body of the silicon carbide based molded body to the bottom face of the jig for firing a silicon carbide based material.

In the firing process, as shown in Fig. 1(a), a degreased silicon carbide based molded bodies 32 are placed in a jig for firing a silicon carbide based material 10, and then the jigs for firing a silicon carbide based material 10, in which the silicon carbide based molded bodies 32 are placed, are piled up in a plurality of stages to form a piled-up body, and thereafter, a lid 33 is placed on the top portion. The piled-up body is then heated by a heater 31 so that the silicon carbide based molded bodies 32 are fired.
Specifically, for example, a method of continuous firing that comprises placing the piled-up body on the supporting table 37, and heating the piled-up body by heaters 31 provided on the upside and the downside of a muffle 34, while allowing the piled-up body to move through the muffle 34, and the like is used.

This firing process may also be carried out by heating the degreased silicon carbide based molded bodies 32 at a temperature of 1400 to 2200 °C under the atmosphere of an inert gas such as nitrogen, argon and the like.
Here, on the supporting table 37, one set of the jigs for firing a silicon carbide based material piled up in a plurality of stages may be placed, or two sets thereof may be placed as shown in Fig. 1, or three or more sets thereof may be placed.

The firing furnace used in this firing process may be a batch-type firing furnace, however, a continuous-type firing furnace is desirable. Because, using a continuous-type firing furnace makes it easier to stabilize the concentrations of SiO gas and CO gas in the furnace at a desired concentration, which is suitable for steadily supplying SiO from the SiO source layer.

In the manufacturing method of the present invention, the firing process is performed within a system including a SiO source.
Specifically, firing is desirably carried out by using the jig for firing a silicon carbide based material of the present invention, because this allows the steady progression of sintering of the silicon carbide based molded body.

Since a degreased silicon carbide based molded body has a low mechanical strength and is easily broken, it is desirable that the jig for firing a silicon carbide based firing body 10 is allowed to function as a degreasing jig, and after a degreasing process, the jigs for firing a silicon carbide based material 10 also functioning as a degreasing jig are piled up in a plurality of stages and then firing is carried out.

The platform member 35 placed on the jig for firing a silicon carbide based material 10 is required to have a heat resistance so as to bear high temperature during firing, and thus the material is desirably those having a heat resistance of this level.
The material of the platform member is desirably those having a relatively high thermal conductivity, and examples thereof include carbon, silicon carbide, aluminum nitride, silicon nitride and the like. Also, carbon cloth is desirably used from the viewpoint of avoiding damage to the porous silicon carbide body.

As mentioned above, in a series of processes from a degreasing process to a firing process, desirably a silicon carbide based molded body is placed on a jig for firing a silicon carbide based material by interposing a platform member, and then directly subjected to the degreasing process and a firing process. This is because the degreasing process and the firing process can be performed efficiently, and also it is possible to prevent the silicon carbide based molded body from being damaged in transfer of the placing and the like.

By using the method for manufacturing a porous silicon carbide body according to the present invention, a silicon carbide based molded body can be certainly sintered, and as a result, a porous silicon carbide body having an almost uniform bending strength can be obtained.

Application of the porous silicon carbide body thus obtained is not particular limited, and it may be used in a variety of applications. For example, it may be used as a member constituting a catalyst supporting body, a member constituting a ceramic filter as shown in Fig. 2, and the like.
With regard to the pore diameter of the obtained porous silicon carbide body, the lower limit value is desirably 1 µm, and more desirably 5 µm, while the upper limit value is desirably 50 µm. With regard to the porosity, the desirable lower limit value is 20%, and the desirable upper limit value is 80%.

### EXAMPLES

The following description will discuss the present invention in detail by means of examples; however, the present invention is not intended to be limited by these examples.

### (Examples 1 to 19)

The following method was carried out to manufacture a jig for firing a silicon carbide based material on which a SiO source layer using hydridopolycarbosilane was formed.
On the bottom face of a previously obtained box-shape jig made of carbon (DSG-332, manufactured by SEC Corp.) with an upper portion opened, a polymer for forming a SiO source layer containing allylhydridopolycarbosilan as a main component (SP-MATRIX Polymer, manufactured by Starfire-Systems Inc.) was applied, and the resulting product was subjected to a process comprising drying at 100 °C for 12 hours followed by firing at 2200 °C for 2.5 hours, repeating the process at the number of the times indicated in Table 1, so that a jig for firing a silicon carbide based material in which a SiO source layer having a thickness of 0.10 to 1.65 mm was formed on the bottom face was manufactured.
The thickness of the SiO source layer was measured by an electric conductive film thickness measuring instrument.

### (Examples 20 to 24)

The following method was carried out to manufacture a jig for firing a silicon carbide based material on which a SiO source layer using a mixture containing a SiC particle and a SiO₂ particle was formed.
First, a mixture was previously prepared by mixing α-type SiC particles (manufactured by YAKUSHIMA DENKO CO., LTD) having an average particle diameter of 0.5 µm and SiO₂ powders (CS-8, manufactured by Yamakawa Sangyo Co., Ltd.) having an average particle diameter of 140 µm at a weight ratio of 1:2.
Next, on the bottom face of a previously obtained box-shape jig made of carbon (DSG-332, manufactured by SEC Corp.) with an upper portion opened, 200g of the previously prepared mixture was applied, and the resulting product was subjected to a firing process at a temperature of 2200 °C for 1.5 hours, repeating the firing process at the times indicated in Table 1, so that a jig for firing a silicon carbide based material in which a SiO source layer having a thickness of 0.07 to 1.68 mm was formed on the bottom face was manufactured.
The thickness of the SiO source layer was measured by an electric conductive film thickness measuring instrument.

### (Examples 25 to 29)

(1) 60% by weight of α-type SiC particles having an average particle diameter of 10 µm, with the surface on which a SiO₂ film was formed (SiO₂ content: 1% by weight), and 40% by weight of α-type SiC particles having an average particle diameter of 0.5 µm, with the surface on which a SiO₂ film was formed (SiO₂ content: 4% by weight) were wet-mixed, and to 100 parts by weight of the resulting mixture, 5 parts by weight of an organic binder (methyl cellulose) and 10 parts by weight of water were added and then kneaded to obtain a kneaded product. Next, a small amount of a plasticizer and a lubricant were added to the kneaded product, and further kneaded. Extrusion molding was carried out thereafter to manufacture a silicon carbide based molded body. In the present Examples, this silicon carbide based material was to be used as a material for recrystallization containing the SiC particles with the surface on which a SiO₂ film is formed.

(2) Next, the above-mentioned silicon carbide based molded body was first dried at 100 °C for 3 minutes by using a microwave drier, and further dried at 110 °C for 20 minutes by using a hot-air drier.

(3) After this, ten pieces of the dried silicon carbide based molded bodies were placed on a jig for firing a silicon carbide based material by interposing a platform member 10 made of carbon. Those jigs for firing a silicon carbide molded bodies were piled up in five stages and a plate-shaped lid was placed on the top portion. The two rows of those piled-up bodies were placed on the supporting table.

(4) Next, the jigs in which silicon carbide based molded bodies were placed were transported into a continuous-type degreasing furnace and subjected to a degreasing process by heating at a temperature of 300 °C under an atmosphere of a mixed gas containing 8% oxygen of an air and nitrogen, so that a silicon carbide degreased bodies were manufactured.

The jigs in which the silicon carbide degreased bodies were still placed were transported into a firing apparatus, and subjected to firing treatment at a temperature of 2200 °C for about 3 hours under an argon atmosphere at a normal pressure, repeating the firing treatment at the number of the times indicated in Table 1, so that a SiO source layer having a thickness of 0.08 to 1.74 mm was formed on the bottom face of the jig for firing a silicon carbide based material.
The thickness of the SiO source layer was measured by an electric conductive film thickness measuring instrument.

### (Comparative example 1)

A jig for firing a silicon carbide based material in which a SiO source layer was not formed was prepared.

### (Evaluations of jigs for firing a silicon carbide based material)

By using the jigs for firing a silicon carbide based material manufactured in the Examples and the Comparative Example, porous silicon carbide bodies were manufactured by the below-mentioned method, and the characteristics of this porous silicon carbide bodies were evaluated.

(1) 60% by weight of an α-type silicon carbide powders having an average particle diameter of 10 µm and 40% by weight of α-type silicon carbide particles having an average particle diameter of 0.5 µm were wet-mixed, and to 100 parts by weight of the resulting mixture were added 5 parts by weight of an organic binder (methyl cellulose) and 10 parts by weight of water, and then kneaded to obtain a kneaded product. Next, a small amount of a plasticizer and a lubricant were added to the kneaded product, followed by kneading further, and then extrusion-molded to manufacture a silicon carbide based molded body.
Here, the amount of SiO₂ contained as an impurity in the silicon carbide based degreased body was 0.03% by weight.

(2) Next, the silicon carbide based molded body was dried by using a microwave drier at a temperature of 100 °C for 3 minutes, and further dried by using a hot-air drier at a temperature of 110 °C for 20 minutes. After that, the dried silicon carbide based molded body was cut, and sealed with a plug paste comprising silicon carbide at the end portion of the cell.

(3) Next, into the jig for firing a silicon carbide based material of the Examples 1 to 29 or the Comparative Example 1, ten pieces of the dried silicon carbide based molded bodies were placed by interposing platform members made of carbon. Those jigs for firing a silicon carbide based material were piled up in five stages, and a plate-shaped lid was placed on the top portion. After that, those two rows of the piled-up bodies were placed on the supporting table.

(4) Next, the above-mentioned jigs in which the silicon carbide molded bodies were still placed were transported into a continuous-type degreasing furnace and subjected to a degreasing process by heating at a temperature of 300 °C under an atmosphere of a mixed gas containing 8% oxygen of an air and nitrogen, so that silicon carbide degreased bodies were manufactured.

The jigs which still kept the silicon carbide degreased bodies placed therein were transported into a firing apparatus, and they were subjected to firing treatment at a temperature of 2200 °C for about 3 hours under an argon atmosphere at a normal pressure, so that a quadrangular pillar-shaped porous silicon carbide body was manufactured.

(5) Next, by using a heat-resistance sealing material paste containing 30% by weight of alumina fibers having an average fiber length of 20 µm, 21% by weight of silicon carbide particles having an average particle diameter of 0.6 µm, 15% by weight of silica sol, 5.6% by weight of carboxymethyl cellulose and 28.4% by weight of water, the 16 pieces of the quadrangular pillar-shaped porous silicon carbide bodies were combined to each other (4 pcs. × 4 pcs.) in accordance with the above-mentioned method, followed by cutting by using a diamond cutter, a cylindrical-shaped ceramic block with the size of 144 mm in diameter × 150 mm in length was manufactured.

After the above process, 23.3% by weight of ceramic fibers made from alumina silicate (shot content: 3%, average fiber length: 100 µm) which served as inorganic fibers, 30.2% by weight of silicon carbide powder having an average particle diameter of 0.3 µm which served as inorganic particles, 7% by weight of silica sol (SiO₂ content in the sol: 30% by weight) which served as an inorganic binder, 0.5% by weight of carboxymethyl cellulose which served as an organic binder, and 39% by weight of water were mixed and kneaded to prepare a sealing material paste.

Next, by using the sealing material paste, a sealing material paste layer having a thickness of 1.0 mm was formed on the peripheral portion of the ceramic block. This sealing material paste layer was dried at 120 °C so that a cylindrical-shaped ceramic filter was manufactured.

The ceramic filter manufactured through the above-mentioned processes was evaluated according to the following evaluation test.

### (Evaluation test)

### (1) Average pore diameter

In compliance with JIS R 1655, using a porosimeter (AutoPore III 9405, manufactured by Shimadzu Corp.) to be used in a mercury injection method, ten pieces of porous silicon carbide bodies were cut into a 1 cm cube with respect to each of the center portions of the porous silicon carbide bodies to prepare samples. Then, the pore distribution in the samples was measured on pores with a pore diameter in the range of 0.2 to 500 µm. The average fine pore diameter of each samples here was calculated based on (4V/A) . The mean value of the average fine pore diameter of each of the ten samples was determined as average pore diameter. The results are shown in table 1.

### (2) Measurements of pressure loss

The initial pressure loss of one of the ceramic filters was measured at a flowing rate of 1000N m³/hr. The results are shown in Table 1. Here, "N" in the unit means that the data were measured in a standard condition (temperature: 25 °C, air pressure: 1 atm)

**Table 1**

| | Repetition time (number of times) | Thickness of SiO source layer (mm) | Average pore diameter (µm) | Pressure loss (kPa) |
|---|---|---|---|---|
| Example 1 | 2 | 0.10 | 10.20 | 16.2 |
| Example 2 | 3 | 0.14 | 10.26 | 16.0 |
| Example 3 | 4 | 0.17 | 10.63 | 15.8 |
| Example 4 | 5 | 0.21 | 11.17 | 15.3 |
| Example 5 | 6 | 0.25 | 11.29 | 15.3 |
| Example 6 | 7 | 0.28 | 11.43 | 14.8 |
| Example 7 | 8 | 0.32 | 11.33 | 15.0 |
| Example 8 | 9 | 0.37 | 11.34 | 14.9 |
| Example 9 | 10 | 0.41 | 11.35 | 15.0 |
| Example 10 | 11 | 0.45 | 11.77 | 14.7 |
| Example 11 | 12 | 0.49 | 11.58 | 14.8 |
| Example 12 | 13 | 0.52 | 11.69 | 14.7 |
| Example 13 | 14 | 0.56 | 11.77 | 14.8 |
| Example 14 | 15 | 0.59 | 11.72 | 14.7 |
| Example 15 | 16 | 0.63 | 11.80 | 14.8 |
| Example 16 | 17 | 0.67 | 11.78 | 14.7 |
| Example 17 | 20 | 0.82 | 12.03 | 14.3 |
| Example 18 | 30 | 1.22 | 12.04 | 14.3 |
| Example 19 | 40 | 1.65 | 12.08 | 14.2 |
| Example 20 | 1 | 0.07 | 10.16 | 16.4 |
| Example 21 | 3 | 0.19 | 10.75 | 15.6 |
| Example 22 | 6 | 0.50 | 12.13 | 14.3 |
| Example 23 | 10 | 0.81 | 12.36 | 13.9 |
| Example 24 | 20 | 1.68 | 12.34 | 14.1 |
| Example 25 | 2 | 0.08 | 10.17 | 16.5 |
| Example 26 | 5 | 0.18 | 10.84 | 15.4 |
| Example 27 | 20 | 0.80 | 12.16 | 13.6 |
| Example 28 | 24 | 1.05 | 12.33 | 13.8 |
| Example 29 | 30 | 1.74 | 12.37 | 13.9 |
| Comparative Example 1 | - | 0 | 9.06 | 17.8 |

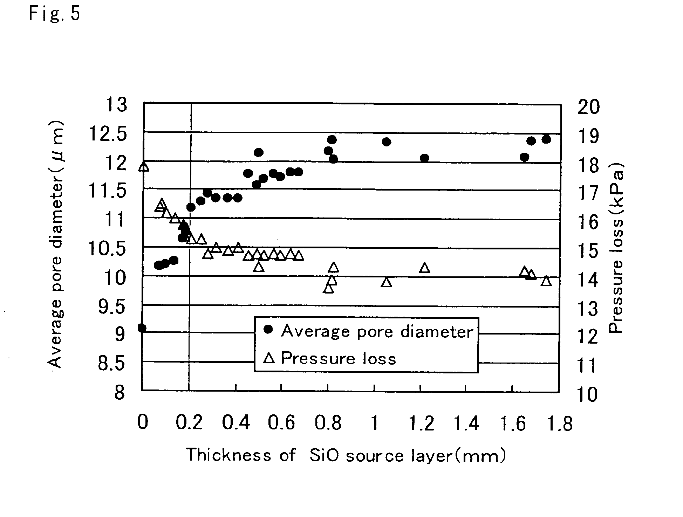

As shown in Table 1 and Fig. 5, a ceramic filter with a low pressure loss can be manufactured by using the porous silicon carbide body manufactured by employing the jig for firing a silicon carbide based material in which a SiO source layer was formed.
Also, by using a jig for firing a silicon carbide based material having a SiO source layer with a thickness of 0.2 mm or more, a ceramic filter with a sufficiently low pressure loss can be manufactured. It is presumably because sintering of the silicon carbide based molded body proceeded steadily in the firing process. On the other hand, by using a jig for firing a silicon carbide based material having a SiO source layer with the thickness of less than 0.2 mm (Examples 1 to 3, 20, 21, 25, 26), the pressure loss of the ceramic filter was likely to be a little high. In this relation, an observation was made on the jig for firing a silicon carbide based material having a SiO source layer with the thickness of less than 0.2 mm, and it was found that the SiO source layer was likely to be formed sparsely, and thus this may be presumed to be the cause.
In the jig for firing a silicon carbide based material with a SiO source layer having a thickness of exceeding 1.6 mm (Examples 19, 23 and 27), a warpage, though slight, was observed.
Fig. 5 is a graph that shows the relations of the thickness of the SiO source layer of the jig for firing a silicon carbide based material in the Examples and the Comparative Example, with the average pore diameter and the pressure loss of the manufactured porous silicon carbide body.

### BRIEF DESCRIPTION OF THE DRAWINGS

Fig. 1(a) is a front view showing a state in which jigs for firing a silicon carbide based material, which are piled up in a plurality of stages, are transported into a firing furnace, and Fig. 1(b) is a partially enlarged front view showing a state in which silicon carbide based molded bodies are piled up by interposing platform members.
Fig. 2 is a perspective view that schematically shows a ceramic filter manufactured by using a porous silicon carbide body.
Fig. 3 (a) is a perspective view that schematically shows a porous silicon carbide body, and Fig. 3(b) is an A-A line cross-sectional view of Fig. 3(a).
Fig. 4(a) is a plain view that schematically shows the jig used in the firing process of a silicon carbide based molded body, and Fig. 4 (b) is a front view that shows a state in which the jigs are piled up in a plurality of stages for firing.
Fig. 5 is a graph that shows the relations of the thickness of the SiO source layer of the jig for firing a silicon carbide based material in the Examples and the Comparative Example, with the average pore diameter and the pressure loss of the manufactured porous silicon carbide body.

### EXPLANATION OF SYMBOLS

- 10: Jig for firing a silicon carbide based material
- 31: Heater
- 32: Silicon carbide based molded body
- 35: Platform member

## Claims

1. A jig for firing a silicon carbide based material, which is used for placing a silicon carbide based molded body thereon upon firing of the silicon carbide based molded body,
wherein
a SiO source layer is formed on at least a part of the surface of said jig for firing a silicon carbide based material.

2. The jig for firing a silicon carbide based material according to claim 1,
wherein
said SiO source layer has a thickness of 0.2 mm or more.

3. The jig for firing a silicon carbide based material according to claim 1 or 2,
wherein
said SiO source layer is formed by using hydridopolycarbosilane.

4. The jig for firing a silicon carbide based material according to claim 1 or 2,
wherein
said SiO source layer is formed by using a mixture containing a SiC particle and a SiO₂ particle.

5. The jig for firing a silicon carbide based material according to claim 1 or 2,
wherein
said SiO source layer is a layer comprising a recrystallized SiC.

6. A method for manufacturing a porous silicon carbide body, comprising:
a degreasing process for degreasing a pillar-shaped silicon carbide based molded body containing a silicon carbide powder and a binder; and
a firing process for firing said silicon carbide based molded body within a system including a SiO source.

7. The method for manufacturing a porous silicon carbide body according to claim 5,
wherein
said firing process is carried out by placing said silicon carbide based molded body on the jig for firing a silicon carbide based material according to any of claims 1 to 5.
